# EUROPEAN PATENT APPLICATION

(11) **EP 3 524 826 A1**
(43) Date of publication of application: **14.08.2019**
(21) Application number: 19156559.7
(22) Date of filing: 12.02.2019
(51) Int. Cl.: F15B 15/10, B25J 9/00, B25J 9/14

(54) **COMPONENT HAVING AN INTEGRATED ACTUATOR SYSTEM**

(30) Priority: 13.02.2018 DE 102018103178
(71) Applicant: Baden-Württemberg Stiftung gGmbH, 70174 Stuttgart (DE)
(72) Inventor: Mader, Anja, 70188 Stuttgart (DE); Born, Larissa, 73207 Plochingen (DE); Gresser, Götz Theodor, 70192 Stuttgart (DE); Knippers, Jan, 70193 Stuttgart (DE); Milwich, Markus, 73529 Schwäbisch-Gmünd (DE); Schieber, Gundula, 70372 Stuttgart (DE); Müller, Lena, 73770 Denkendorf (DE); Körner, Alex Hannes, 70182 Stuttgart (DE)
(74) Representative: DREISS Patentanwälte PartG mbB

(57) **Abstract**

A component (10) having at least one first component section (12) and one second component section (14), wherein the component (10) comprises several layers (16, 18), with regard to producing movements on a component, using simple design means, that allow the component to be adapted to changed environmental conditions is designed and refined in such a way that a chamber (20) that is expandable by introducing a fluid (21) is arranged between the first component section (12) and the second component section (14) between two adjoining layers (16, 18), wherein the component (10) is configured in such a way that the first component section (12) and the second component section (14) move relative to one another by expansion of the chamber (20).

## Description

The invention relates to a component having at least one first component section and one second component section, wherein the component comprises several or multiple layers.

Components of the above-mentioned type are known from the prior art, for example from the field of so-called "soft robotics," which is a field in robotics involving the design of robots from soft or flexible materials. Model of such constructions are e.g. living organisms from nature.

In soft robotics, approaches to the actuation are generally limited to small-scale applications, since these approaches are based, among other things, on the high degree of flexibility of the material used, which requires selection of a highly elastic material and imposes limits on the stability of the design. Thus, high stresses may be handled, if at all, only with a high level of design effort. Movement of such robots may take place by use of dielectric, elastomeric actuators or shape memory alloys. This results in a complex construction for such designs.

The object of the invention is to produce movements on a component, using simple design means that allow the component to be adapted to changed environmental conditions. It is desirable for the proposed approach to also be suitable for large-scale applications.

This object is achieved by the invention by use of a component (structural component or structural element) having the features of claim 1. Accordingly, the component is characterized in that a chamber, in particular an inflatable chamber, that is expandable by introducing a fluid, is arranged between the first component section and the second component section, between two adjoining or adjacent layers, wherein the component is configured for the first component section and the, in particular adjoining, second component section to move relative to one another by expansion of the chamber, in particular by inflation of the chamber (directed movement of the component or of a component section).

In other words, this is a component having integrated (pneumatic or hydraulic) actuation (component having an integrated actuator system). As the result of integrating the chamber into the component, a movement of the component or of a component section may be produced by increasing the pressure in the chamber. A gas, in particular compressed air, or a liquid may be used as fluid.

Integrating such an expandable chamber into the component has the advantage of very low weight and the elimination of an external actuating system, which requires space as well as options for fastening to the component for the transmission of force. In the state without fluid impingement (unexpanded or uninflated state), the chamber occupies only a negligibly small volume in the component. However, in the state with fluid impingement (expanded or inflated state), high forces may be generated which are transmitted over comparatively large areas (chamber walls) to the component.

The component or the component sections move(s), stretch(es), or curve(s) due to the action of a fluid on the chamber, without the need for a separate mechanical device such as an articulated joint or the like. There is little or no change in shape of the material.

The material outlay and the mechanical complexity are reduced by integrating the chamber into the component. In addition, the chamber, as the result of being integrated into the component, is protected from environmental influences and damage.

As stated above, the component has several or multiple layers; in particular, the component is formed by the several or multiple layers. The component also comprises the several or multiple layers in the first component section and in the second component section.

As a result of the integrated actuator system, the component constitutes an active component, with the component being able to adapt to changing environmental conditions. For example, the component may form part of a building shading. It is also conceivable to use the component for coupling or connecting several separate parts. For example, one part may be fastened in the first component section, and another part may be fastened in the second component section. The parts may be moved relative to one another by the impingement of a fluid on (or applying a fluid to) the chamber.

For the fluid impingement, a fluid source is provided which is fluidically connected to the chamber, in particular via an access or access point (inlet) to the chamber. Depending on the fluid used, a compressor (gas or compressed air) or a hydraulic pump (liquid) can be used. It is advantageous when the fluid source is situated remotely, i.e., separately, from the component, so that the actuation on the component may be carried out in a space-saving manner with low noise. The component is infinitely adaptable (continuously variable) by controlling the fluid source, in particular by regulating the fluid pressure.

In one preferred embodiment, the component may be configured in such a way that by expansion of the chamber, the distance of the first component section and the second component section relative to one another is changed (shortening or contraction), or the orientation of the first component section and the second component section relative to one another is changed (with an expanded chamber, the angle enclosed by the component sections is different than with an unexpanded chamber). The desired actuation of the component may thus be achieved with an appropriate design.

Specifically, the chamber may be designed as a separate cushion that is integrated into the component, or as a cavity in the component. By use of an integrated cushion, a closed compartment may be formed, regardless of the design of the component. The cushion ("fluid cushion") may be laminated into the material of the component. A component part, namely, the cushion, may be omitted by designing the chamber as a cavity. The chamber is at least temporarily fluid-tight.

The chamber may advantageously have an access or access point (inlet) for supplying and discharging the fluid. In this way, the chamber may be brought from the unexpanded state into the expanded state, and vice versa. The access point is in particular fluidically connected to a provided fluid source (compressor or hydraulic pump).

The access point may advantageously have a valve. In this way, control of the chamber (pressure regulation) may take place, regardless of a fluid source or its operating state. For example, the expanded state of the chamber may be maintained, at least for a certain time, by maintaining the pressure in the chamber.

Furthermore, the layers of the component are made completely or partially of a fiber composite, an elastomer, or a plastic. A sufficiently stable component may thus be realized which is also able to absorb high stresses. This also makes large-scale applications with high loads possible, such as a building shading.

Specifically, the fiber composite may include technical fibers (for example, glass fibers, carbon fibers, or in particular pretreated polyethylene fibers), in particular having a duroplastic or thermoplastic matrix. Comparatively high strengths may be achieved by using technical fibers. In addition, a high level of dimensional stability (shape stability) may be achieved by using a duroplastic or thermoplastic matrix. This favors applications having comparatively high stresses, as described above.

In addition, it is advantageous when the chamber is at least partially, preferably completely, enclosed or encased by one or more elastomeric materials. Peak stresses and delamination may be largely avoided in this way.

The layers adjoining the chamber may advantageously have identical or almost identical rigidities. This may be achieved, for example, by using the same material having the same thickness. An "almost identical rigidity" is understood to mean that the rigidities of the adjoining layers differ from one another by less than 20 percent. As the result of such a design, the component contracts or shortens by expansion of the chamber in the sense of a targeted movement.

Alternatively or additionally, the layers adjoining the chamber may have different rigidities. This may be achieved, for example, by using different materials for the layers, or by using the same materials in different thicknesses. "Different rigidities" is understood to mean that the rigidities of the adjoining layers differ from one another by at least 20 percent. As the result of such a design, the component undergoes a rotational motion in the sense of a targeted movement. Simply stated, the movement is determined by a (more or less rigid) design of the layers having the same or different thicknesses.

In one preferred embodiment, the component may have several or multiple chambers that are expandable by introducing a fluid. This allows greater movements of the first component section and the second component section relative to one another, in particular for chambers having identical arrangements (chambers arranged in the same orientation). Greater contraction or shortening (for a symmetrical design of the layers) or greater rotational motions (for an asymmetrical design of the layers) may thus be achieved. More complex movements may also be achieved by combining several or multiple chambers in different orientations. The chambers may be fluidically connected to one another for a structurally simple control.

The invention is explained in greater detail below with reference to the figures, with identical or functionally equivalent parts optionally provided with reference numerals only once. The figures show the following:
- Figure 1: shows one embodiment of the component in the unexpanded state (view (a)) and expanded state (view (b)) in schematic side views (schematic illustration);
- Figure 2: shows another embodiment of the component in the unexpanded state (view (a)) and expanded state (view (b)) in schematic side views (schematic illustration);
- Figure 3: shows another embodiment of the component with multiple layers, in an exploded illustration;
- Figure 4: shows the component from Figure 3 in a first angled position (view (a)), a second angled position (view (b)), and a third angled position (view (c)), in each case in a side view; and
- Figure 5: shows one embodiment of the component with multiple chambers in the unexpanded state in a top view (view (a)), and in the expanded state in a sectional side view (view (b)).

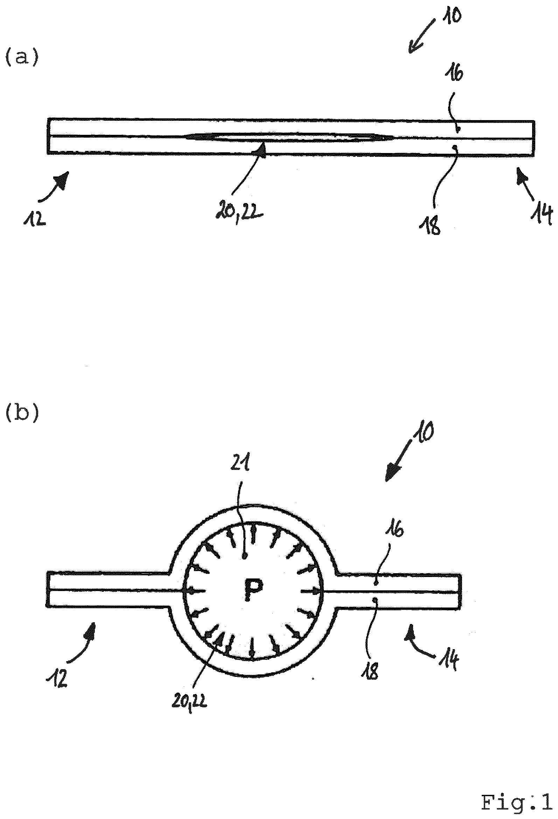

Figure 1 shows a component that is denoted overall by reference numeral 10. The component 10 comprises a first component section 12 and a second component section 14. The component 10 has multiple layers, in the present case two layers 16, 18.

A chamber 20 that is expandable by introducing a fluid 21 is situated or arranged between the first component section 12 and the second component section 14, between the two adjoining layers 16, 18. In other words, the chamber 20 may be brought from an unexpanded or uninflated position (view (a)) into an expanded or inflated position (view (b)) by introducing the fluid 21. The component 10 is configured in such a way that the first component section 12 and the second component section 14 move relative to one another due to expansion of the chamber 20.

In the present exemplary embodiment, the component 10 is configured in such a way that the distance of the first component section 12 and the second component section 14 relative to one another changes, namely, is shortened, by expansion of the chamber 20 (which is apparent based on a comparison of view (a) to view (b)). This shortening results from the fact that the layers 16, 18 adjacent to the chamber 20 have almost identical rigidities, for example by a design of the layers 16, 18 with the same material in the same thickness, as described above.

In the present case, the chamber 20 is designed as a cavity 22 that is at least temporarily fluid-tight. Alternatively, the chamber 20 may be designed as a separate cushion that is integrated into the component 10. The chamber 20 has an access or access point for supplying and discharging the fluid 21 (not illustrated). For acting on the chamber 20 by the fluid 21, the chamber is fluidically connected (not illustrated) to a fluid source (compressor or hydraulic pump). The access point may optionally have a valve, in particular a controllable valve, for regulating the pressure in the chamber 20.

The layers 16, 18 of the component 10 may be made completely or partially of a fiber composite, an elastomer, or a plastic. In the case of a fiber composite, it may include technical fibers (for example, glass fibers, carbon fibers, or in particular pretreated polyethylene fibers), in particular having a duroplastic or thermoplastic matrix, as described above.

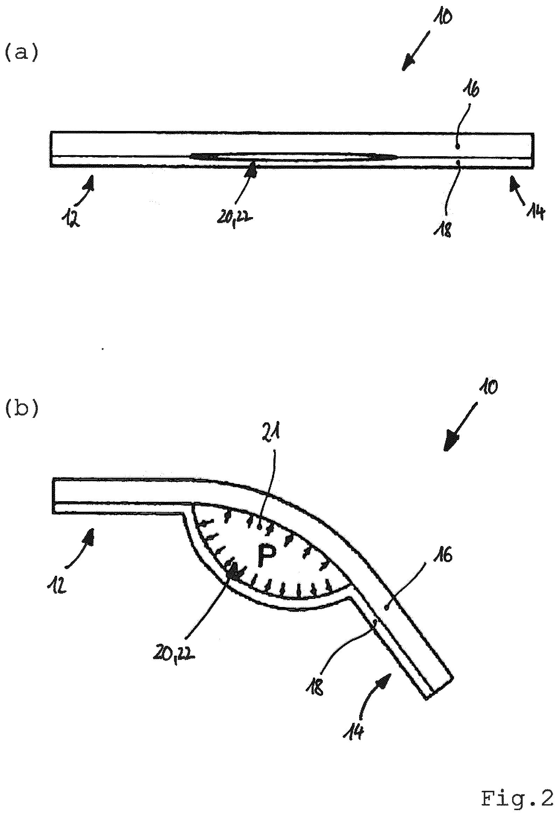

Figure 2 shows a component 10 whose design largely corresponds to the design of the component 10 described above, so that reference is made to that explanation.

Deviating therefrom, the present component 10 is configured in such a way that the orientation of the first component section 12 and the second component section 14 relative to one another is changed by expansion of the chamber 20 (which is apparent based on a comparison of view (a) to view (b)). In other words, with an unexpanded or uninflated chamber the first component section 12 and the second component section 14 are in a parallel orientation or even lie in a plane (view (a)), and with an expanded or inflated chamber the first component section 12 and the second component section 14 are in an angled position in which the first component section 12 and the second component section 14 enclose an angle (view (b)).

This movement results due to the fact that the layers 16, 18 adjoining the chamber 20 have different rigidities, for example by using different materials for the layers, or by using the same materials in different thicknesses, as described above. A rotational motion is produced in this way. An articulation zone in which the chamber 20 is situated is thus formed.

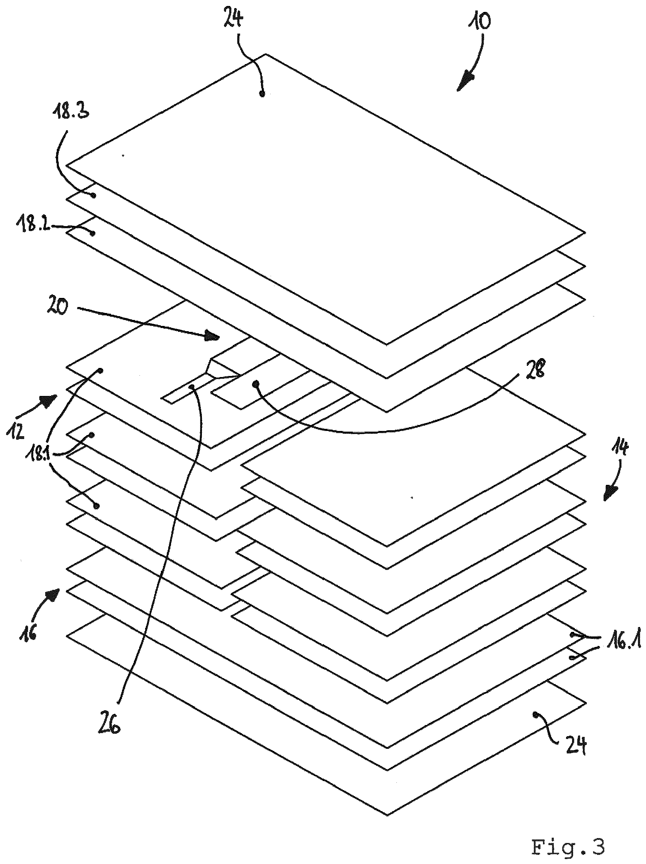

Figure 3 shows one embodiment of a component 10 having multiple layers, in an exploded illustration; this component 10 carries out a rotational motion, corresponding to the illustrations in Figure 2, when its chamber 20 is acted on by a fluid 21.

The component 10 comprises a first component section 12 and a second component section 14, the component 10 having multiple layers 16, 18. A chamber 20 that is expandable by introducing a fluid 21 is situated or arranged between the first component section 12 and the second component section 14, between two adjoining layers 16, 18. The component 10 is configured in such a way that the first component section 12 and the second component section 14 move relative to one another by expansion of the chamber 20. Specifically, the orientation of the first component section 12 and the second component section 14 changes, and they take an angled position.

The component 10 has a film 24, such as a PVC layer, on both sides. This film protects the interior of the component 10 from environmental influences such as sunlight. An attractive appearance may also be achieved in this way. Multiple, in the present case three, layers 16.1, which may each be a glass fiber prepreg, are situated above the bottom film 24 in Figure 3.

The component 10 also has several or multiple layers 18.1, in the present case six, layers 18.1, which for accommodating the chamber 20 are each interrupted at one location. The layers 18.1 may each be a glass fiber prepreg.

The chamber 20 is designed as a pneumatic cushion 22. Alternatively, the chamber 20 may be designed as a cavity 22. The chamber 20 has an access point 26 via which the chamber 20 may be acted on by a fluid 21. For this purpose, the access point 26 may be fluidically connected to a compressor or a hydraulic pump. The chamber 20 is enclosed by an elastomer 28. Peak stresses and delamination may be avoided in this way.

The component also has a layer 18.2, which may be an elastomer. In addition, a layer 18.3 is provided which adjoins the top film 24 in Figure 3, and which may be a glass fiber prepreg or a glass fiber fabric. It is also conceivable for the positions of the layer 18.2 and the layer 18.3 to be interchanged.

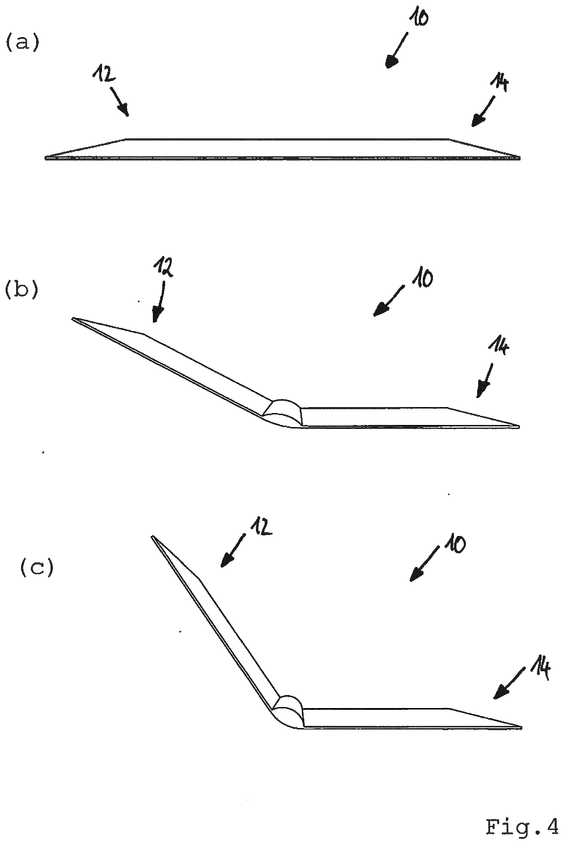

Figure 4 shows multiple side views of the component 10 from Figure 3 in multiple positions. In a first position (view (a)), which may be a starting position (chamber 20 unexpanded or only slightly expanded), the first component section 12 and the second component section 14 enclose a very large angle (an angle between 160° and 180°).

In a second position (view (b)), in which the chamber 20 is partially expanded, the first component section 12 is swiveled relative to the second component section 14. The first component section 12 and the second component section 14 now enclose only a large angle (an angle between 110° and 130°).

In a third position (view (c)), in which the chamber 20 is greatly or completely expanded, the first component section 12 is swiveled even further relative to the second component section 14. The first component section 12 and the second component section 14 now enclose only a moderately large angle (an angle between 90° and 110°).

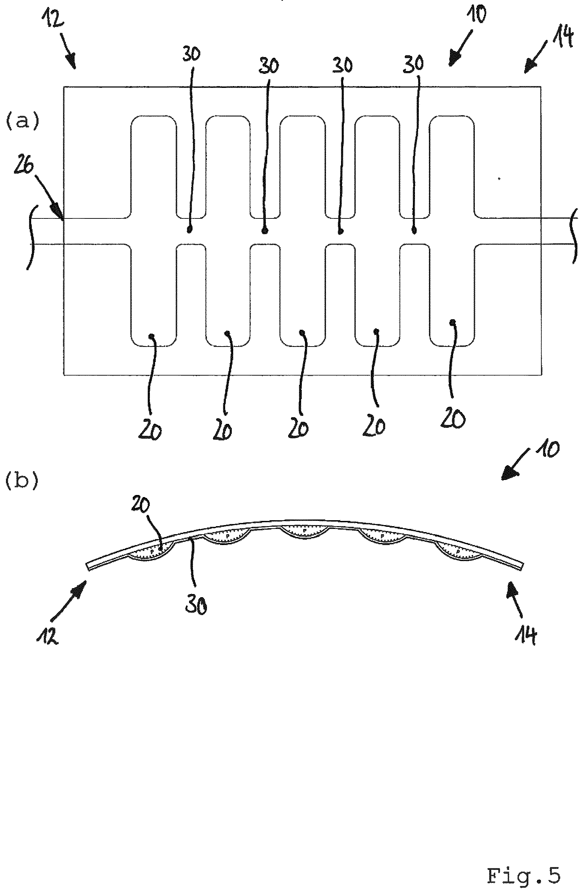

Figure 5 shows another component 10 in a top view (unexpanded state) and in a sectional side view (expanded state). This component 10 corresponds largely to the embodiment described for Figure 2, so that reference is made to that explanation.

Deviating therefrom, the present component 10 has multiple chambers 20, in particular a total of five chambers 20, that are expandable by a fluid 21. The chambers 20 may be acted on by a fluid via an access point 26, and thereby expanded. The chambers 20 are fluidically connected to one another via connecting sections 30.

The component 10 is configured in such a way that the orientation of the first component section 12 and the second component section 14 relative to one another changes by expansion of the chambers 20, so that the component 10 takes an arched shape (expanded state according to view (b)).

## Claims

1. A component (10) having at least one first component section (12) and one second component section (14), wherein the component (10) comprises several layers (16, 18), **characterized in that** a chamber (20) that is expandable by introducing a fluid (21) is arranged between the first component section (12) and the second component section (14) between two adjoining layers (16, 18), wherein the component (10) is configured in such a way that the first component section (12) and the second component section (14) move relative to one another by expansion of the chamber (20), wherein the layers (16, 18) of the component (10) are made completely or partially of a fiber composite.

2. The component (10) according to claim 1, **characterized in that** the component (10) is configured in such a way that the distance or the orientation of the first component section (12) and the second component section (14) relative to one another is changed by expansion of the chamber (20).

3. The component (10) according to claim 1 or 2, **characterized in that** the chamber (20) is configured as a separate cushion (22) integrated into the component (10) or as a cavity (22) in the component (10).

4. The component (10) according to one of the preceding claims, **characterized in that** the chamber (20) has an access (26) for supplying and discharging the fluid (21).

5. The component (10) according to claim 4, **characterized in that** the access (26) comprises a valve.

6. The component (10) according to one of the preceding claims, **characterized in that** the fiber composite includes technical fibers, in particular having a duroplastic or thermoplastic matrix.

7. The component (10) according to one of the preceding claims, **characterized in that** the layers (16, 18) adjoining the chamber (20) have identical or at least almost identical rigidities.

8. The component (10) according to one of the preceding claims, **characterized in that** the layers (16, 18) adjoining the chamber (20) have different rigidities.

9. The component (10) according to one of the preceding claims, **characterized in that** the component (10) comprises several chambers (20) that are expandable by introducing a fluid (21).
